# EUROPEAN PATENT APPLICATION

(11) **EP 4 371 390 A1**
(43) Date of publication of application: **22.05.2024**
(21) Application number: 22208584.7
(22) Date of filing: 21.11.2022
(51) Int. Cl.: A01D 34/00, G05D 1/02

(54) **SYSTEM AND METHOD FOR CONTROLLING AT LEAST ONE ROBOTIC MOWER**

(71) Applicant: SMAUT Technology s.r.o., 198 00 Praha (CZ)
(72) Inventor: Sopik, Vincenc, 79001 Jeseník (CZ)
(74) Representative: Klickow & Wetzel PartGmbB

(57) **Abstract**

The invention relates to a system and method for controlling at least one robotic mower (1) by means of a server (21). According to the invention the processing resources for the calculation of the working paths (41) within a predetermined working area (40), the monitoring of the position of the at least one robotic mower and the calculation of correction data (25) is provided on a server (21) which is wirelessly connected with the at least one robotic mower (1).

## Description

The invention relates to a robotic mower for mowing the vegetation on a defined work area.

Further, the invention relates to a system for controlling at least one robotic mower.

Furthermore, the invention relates to a method for controlling at least one robotic mower.

Robotic mowers are already used in several applications today. For example, robotic lawn mowers are used for work areas like gardens, where the grass is constantly kept short. In other applications larger robots with more mowing power are required, for example for keeping solar fields free of higher vegetation. For these large robotic mowers, a manual human control with a remote controller is applied today due to safety concerns. This is because large robots may at least cause severe injuries to human or animals as well as serious damage to things or themselves, when they get out of control.

Therefore, the full or partial autonomous operation of robotic mowers requires a high degree of reliability of the used technology.

For an autonomous operation of at least one robotic mower in a work area at least the boundaries / the perimeter of the work area needs to be defined. This can for example be done by a mechanical fencing of the work area, by a boundary wire, which is laid around the work area, or by capturing the geolocation of the perimeter. The latter requires less preparation of the work area but a more sophisticated technology since it is required to permanently determine the position of the robotic mower.

The autonomous operation of robotic mowers on the work area can for example follow precalculated paths to mow the work area or use randomly distributed paths. For larger working areas and/or areas with many obstacles precalculated mowing paths help to achieve a full coverage of the work area more efficiently.

The technology required to reliably control a robotic mower in an at least partial autonomous operating mode has to provide enough processing resources to process sensor inputs, for example from collision sensors, positioning data and control data for controlling the movement and the mowing operation of the robotic mower in real time.

The environment for this technology integrated in a robotic mower is harsh due to weather influences, vibration and heat generated by the driving unit of the robotic mower.

Thus, including this technology in the robotic mower requires efforts to protect the applied hardware. In addition, when thinking of multi-robot systems, it is not cost effective to include all of the required hard- and software in each individual robot.

In general, with the robotic mowers and systems known from the state of the art maintaining a high level of security is very costly.

It is therefore an object of the invention to provide a robotic mower to overcome at least some of the problems of the state of the art.

This object is achieved by the robotic mower according to claim 1.

It is another object of the invention to provide a system for controlling at least one robotic mower to overcome at least some of the problems of the state of the art.

This object is achieved by the system for controlling at least one robotic mower according to claim 6.

It is further an object of the invention to provide a method for controlling at least one robotic mower to overcome at least some of the problems of the state of the art.

This object is achieved by the method for controlling at least one robotic mower according to claim 15.

In the dependent claims advantageous embodiments of the invention are claimed.

The following disclosed features of a robotic mower, a system for controlling at least one robotic mower and a method for controlling at least one robotic mower are part of the invention in all practicable combinations.

A robotic mower according to this invention comprises at least one axle with at least one wheel, a drive system, at least one mowing unit and a chassis to carry all the parts of the robotic mower.

The drive system comprises at least one propulsion unit, for example an electric motor, a combustion motor or a hybrid engine as well as the at least one corresponding energy storage unit, like for example a battery or a fuel tank, as well as the mechanical devices required to couple the propulsion unit with the at least one axle.

In embodiments of the invention with more than one axle at least one of the axles is driven by the drive system. In preferred embodiments of the invention all axles are driven by the drive system to allow the robotic mower to operate in more demanding terrains.

The at least one mowing unit is designed for mowing vegetation, for example like grass, young trees or bushes, in a certain height above the ground.

In embodiments of the invention the cutting height of the at least one mowing unit is adjustable.

The robotic mower according to the invention comprises at least one sensor for detecting at least one measured variable.

For example, at least one collision sensor and/or at least one inclination sensor is mounted on the robotic mower.

In embodiments of the invention the at least one sensor is an accelerometer, an altimeter, a LIDAR sensor system, an engine parameter sensor a sensor to measure the revolutions of the mower knife(s) and/or an inertial measurement unit (IMU) may be integrated into the robotic mower.

An engine parameter sensor is designed to measure the rpm of the engine, the temperature of the engine and/or the load of the engine.

The robotic mower according to this invention comprises at least one localization module. The localization module is designed to determine the position of the robotic mower with the help of a global navigation satellite system (GNSS). To achieve a high accuracy of the localization module it is designed to work in a high-accuracy GNSS like differential global navigation satellite system (DGNSS) and/or a satellite-based augmentation system for GNSS (SBAS GNSS).

In preferred embodiments of the invention an accuracy of the detected position of the robotic mower in the range of +/- 10 cm for the localization mode is realized by the use of a high-accuracy DGNSS.

In particularly preferred embodiments of the invention an accuracy of the detected position of the robotic mower in the range of 1 cm for the localization mode is realized by the use of a high-accuracy DGNSS for at least 99% of the operating time.

The localization unit of a robotic mower according to the invention is designed to determine the position of the robotic mower and the accuracy of the determined position in preferred embodiments of the invention.

The robotic mower according to this invention comprises a communication unit to wirelessly communicate with a server.

In preferred embodiments of the invention the communication unit is designed to establish a communication link to the server using a telecommunication network.

The telecommunication network may be a GSM-network, UMTS-network, LTE-network, 5G-network or a similar telecommunication network for example. Other radio networks like for example LoRa, Sigfox or any suitable private channel radio network may also be used in embodiments of the invention.

In embodiments of the invention a telecommunication network providing a minimum data rate of 0.9 Mbps is used for the communication link between the robotic mower and the server.

In preferred embodiments of the invention the communication unit is additionally designed to establish a wireless communication link between an operator device and/or a user terminal and the robotic mower.

The operator device may for example be a remote controller to manually control the robotic mower.

The user terminal is designed to provide a user portal and may be implemented by a portable user device like a smartphone, a tablet pc or a laptop or may be integrated into the operator device.

The communication unit of the robotic mower is designed to establish for example a Bluetooth and/or a UHF-communication link between the robotic mower and the operator device in embodiments of the invention.

In embodiments with a local correction station to complement the GNSS to a high-accuracy GNSS, the communication unit of the robotic mower is designed to establish a wireless communication link between the robotic mower and the local correction station.

In addition or alternatively to the local correction station correction data from a public RTK-network (RTK means real time kinematic), like for example APOS in Austria or CZEPOS in the Czech Republic, is used to realize a high-accuracy GNSS in embodiments of the invention.

The communication unit is designed to establish an LTE communication link or apply a similar telecommunication network between the robotic mower and the local correction station in preferred embodiments of the invention to allow the data transfer at high data rates.

In especially preferred embodiments of the invention the communication unit is designed to establish a backup communication link between the local correction station and the robotic mower in the event of a weak signal or a signal loss of the used telecommunication network.

The communication unit is designed to use UHF-communication for the backup communication link in certain embodiments of the invention.

In embodiments of the invention the communication links of the communication unit are for example designed to operate in a frequency band between 430 to 470 MHz. The exact frequency may depend on local, regional or national regulations. In an embodiment of the invention, for example for a use in the Czech Republic, the UHF-frequency of the communication unit is set to 444.375MHz or 446.8 MHz.

The robotic mower according to the invention is designed to receive complete working path information for an assigned work area from the server and to perform the mowing operation following the precalculated working path.

The working path information at least contain the coordinates of a start and an end position of the working path. At least as soon as any change of direction, for example a turn, is included in the working path, coordinates of the path between the start and the end position are included as well.

In embodiments of the invention the distance of following coordinates of the working path to be transmitted to the robotic mower is different for straight segments of the path and turn segments of the path. The coordinates for turn segments are sent with a higher resolution (less spaced) compared to the coordinates for straight segments.

In embodiments of the invention for the straight path segments of the working path only the start and the endpoint coordinate for these segments are transmitted to the robotic mower.

In embodiments of the invention for the turn segments of the working path coordinates with a distance of 10 cm or less, preferably 5 cm or less, especially preferred of about 3 cm or less on the working path are transmitted to the robotic mower.

In advantageous embodiments of the invention the working path information comprises additional operating instructions for the robotic mower. These additional instructions may for example be the speed, the heading, the cutting height to be used by the robotic mower at different locations on the working path.

In preferred embodiments of the invention the robotic mower is designed to receive correction data from the server while operating on the working path and to use the correction data for navigating itself. Due to the characteristics of the terrain and/or temporal inaccuracies of the localization module the robotic mower may seem to leave or actually leave the precalculated working path. This could lead to collisions with obstacles or unsatisfying results of the mowing operation if parts of the work area are not mowed. Therefore, the correction data allows the robotic mower to quickly correct deviations from the precalculated working paths and to get back on track.

In preferred embodiments of the invention the localization module of the robotic mower is equipped with an inertial navigation unit to allow navigation of the robotic mower in case of a GNSS-signal loss.

In preferred embodiments of the invention the robotic mower is designed to at least temporarily store determined parameters that are to be transmitted for example to the server in the case of a loss of connection to the telecommunication network and to send these parameters to the intended recipient immediately after the connection is restored. These parameter may comprise for example the position and/or status data of the respective robotic mower.

In preferred embodiments of the invention the robotic mower is designed to measure values for the load (to the mowing unit), the remaining energy / fuel level, the operating hours, the wheel turning position (to predict trajectory of the robotic mower and correction of yawning movement) and/or the heading of the robotic mower. The last two information are specifically required for embodiments with individually controllable wheels to stabilize the movement of the robotic mower and allow moving on straight lines.

In preferred embodiments of the invention the robotic mower is designed to operate in a system for controlling at least one autonomous robot according to the invention.

A system for controlling at least one autonomous robot according the invention comprises at least one server and at least one robotic mower and is designed to plan and to control the mowing operation of the at least one robotic mower on a defined work area.

In embodiments of the invention the server is a remote server which can be operated independent of the location with respect to location of the at least one robotic mower and/or the work area.

The robotic mower and the server are connected by a wireless communication link. In preferred embodiments of the invention the wireless communication link is realized by a wireless telecommunication network like a GSM-network, UMTS-network, LTE-network, 5G-network or a similar telecommunication network.

In preferred embodiments of the invention the system comprises a user terminal wherein the server is connected to the user terminal, for example realized by a portable user device like a smartphone, a tablet pc or a laptop. The user terminal is designed to provide a user portal, where information regarding a planned, running or a past mowing operation is been made available for the user and user input may be entered and communicated to the server.

In preferred embodiments of the invention the user terminal and the server are connected by a wireless communication link. In preferred embodiments of the invention the wireless communication link is realized by a wireless telecommunication network like a GSM-network, UMTS-network, LTE-network, 5G-network or a similar telecommunication network.

In embodiments of the invention the user portal is designed to input certain parameters to the system like the desired cutting height of the mowing unit(s) and/or to set a certain orientation of the at least one robotic mower in a certain section of the working path (e.g. to allow operation at steep slopes or other demanding terrain) and/or to define at least one refueling / recharging or maintenance zone to which the at least one robotic mower is guided when required.

In embodiments of the invention the user portal is designed to receive geolocation inputs required for the server to generate the map of the work area and/or the at least one working path.

In embodiments of the invention the user portal is designed to allow a user a monitoring of the at least one robotic mower with respect to the status and conditions of the robotic mower and/or to check the at least one calculated working path for a mowing operation before the start.

For example, the user portal is designed to show the map of the work area, the calculated path(s), the current position(s), the fuel level / the remaining battery energy, the engine load, the total operating hours, the total driven distance and/or warning or error messages of the at least one robotic mower. This data allows the user for example to locate the robotic mower(s) and/or to plan maintenances and/or to adapt the operating instructions for a planned mowing operation.

In embodiments of the invention another output of the user portal is for example the temperature measured inside the control unit of a robotic mower and/or the distance between robotic mowers of the system and/or status data regarding the local correction station.

For the local correction station, the status data may for example comprise the exact position, the battery level and/or the status of the communication link to the at least one robotic mower and/or the method on how the position of the local correction station has been determined (e.g. if a known measuring point is used or if the position is measured by itself) can be output.

In embodiments of the invention further inputs that can be made through the user portal. For example, a blocking indicator can be input for a specific robotic mower, that is e.g. stolen, so that it cannot be used.

The server is designed to receive work area related data at least comprising geolocations allowing the server to create a map of the work area.

In embodiments of the invention these geolocations are manually measured coordinates on the perimeter of the work area which are entered in the user portal and sent to the server or coordinates transmitted directly or indirectly from a GNSS positioning device used to record coordinates on the perimeter of the work area to the server. The server is designed to automatically connect these coordinates to generate the map of the work area.

In embodiments of the invention the coordinates provided to the server for generating the map of the work area are two-dimensional (2D) coordinates comprising the latitude and longitude values.

Additional information assigned to the individual coordinates via the user portal may give the server additional information on how to connect the individual coordinates to the perimeter in certain embodiments of the invention. For example, numbers may be manually or automatically assigned to the individual coordinates or groups of coordinates to specify the order of the coordinates to be connected for example to the boundary of the work area or the coordinates or groups of coordinates may be named.

In other embodiments of the invention the perimeter coordinates may be recorded by manually guiding a robotic mower along the perimeter of the work area and sent to the server.

In preferred embodiments of the invention the server is additionally designed to receive the positions of obstacles within the work area and to include the corresponding positions in the map of the work area.

In especially preferred embodiments of the invention the server is furthermore designed to receive robot specific information on the at least one robotic mower to be used and to use the robot specific information for the calculation of the at least one working path. This robot specific information may for example comprise the width of the robotic mower and/or the width covered by the mowing unit of the robotic mower in embodiments of the invention.

The server is designed to calculate at least one working path for the at least one robotic mower to mow a predefined work area using the provided data regarding the work area. The at least one working path is calculated to completely cover the work area or a defined sub area during the mowing operation.

In preferred embodiments of the invention the server is designed to calculate the at least one working path such that collisions with any of the specified obstacles are avoided.

In embodiments of the invention the server is designed to generate a multi-layer map of the work area, wherein one layer contains the work area or at least its perimeter, another layer contains the obstacles at their positions and potential other layers contain additional work area related information like the position dependent GNSS signal strength, the position dependent LTE signal quality or other data relevant for the navigation of the at least one robotic mower. Especially areas without any GNSS or LTE signal (or similar if another communication technology is used) are of interest to be considered when calculating the paths for the robotic mower.

Layers of the map with the signal strengths / quality for the applied position detection system and/or the communication allow the server to consider this data for the calculation of the working paths in advance to a mowing operation or to adapt the working paths as a real time reaction to events occurring during the mowing operation in the respective embodiments of the invention.

In preferred embodiments of the invention the server is designed to receive 2D-coordinates of the work area, to generate a 2D-map of the work area and to calculate 2D work paths for robotic mowers. This enables a system with less required memory space and faster calculations of working paths and correction data compared to the use of three dimensional (3D) coordinates and a 3D-map.

The at least one robotic mower is designed to receive the calculated work path from the server and to follow the assigned work path during the mowing operation.

The at least one robotic mower is designed to permanently determine its position at least during the mowing operation and to send the position data to the server.

In preferred embodiments of the invention the system for controlling at least one robotic mower comprises at least one local correction station to realize a high accuracy GNSS in combination with at least one GNSS receiver mounted on the at least one robot.

The at least one robotic mower is designed to establish a wireless communication link to the at least one local correction station in the corresponding embodiments of the invention and to use the at least one local correction station to realize the high-accuracy GNSS.

The at least one robotic mower is designed to establish an LTE communication link or apply a similar telecommunication network between the robotic mower and the local correction station in preferred embodiments of the invention to allow the data transfer at high data rates.

In especially preferred embodiments of the invention the at least one robotic mower is designed to establish a backup communication link between the local correction station and the robotic mower in the event of a weak signal or a signal loss of the used telecommunication network.

The at least one robotic mower is designed to use UHF-communication for the backup communication link in certain embodiments of the invention.

The server is designed to permanently monitor the position of the at least one robotic mower at least during the mowing operation and to detect deviations of the current position of the at least one robotic mower and the assigned work path.

The server is designed to calculate correction data for the at least one robotic mower based at least on the position of the robotic mower and the deviation from the assigned work path and to send this correction data to the corresponding robotic mower to control the robotic mower back on the assigned track.

In preferred embodiments of the invention the system is designed to determine the position of a robotic mower and to calculate the corresponding correction data at least several times per second. This enables the system to achieve a very high accuracy of the position control of the at least one robotic mower relative to the calculated working path in the range of 1 cm.

In preferred embodiments of the invention the server is designed to consider additional information to calculate the correction data for a robotic mower. This additional information may comprise sensor-data provided by the robotic mower like the axis-dependent inclination of the robotic mower.

In embodiments of the invention the robotic mower is designed to permanently measure its axis-dependent inclination and/or the heading and/or the turning position of at least one wheel of the robotic mower and/or the speed of the robotic mower determined via GNSS and/or the rotational speed of the wheels of the robotic mower. The turning position of a wheel means the turning position of a wheel relative to the longitudinal axis of the robotic mower.

In embodiments of the invention the server is designed to receive at least one of these data from at least one robotic mower and to use the data for calculating the correction data for the corresponding robotic mower.

In particularly advantageous embodiments of the invention the server is designed to consider the height and/or the density of the vegetation to be mowed for the initial calculation of the working path for at least one robotic mower and/or for updating the assigned working path of at least one robotic mower during mowing operation.

The height and/or density of the vegetation to be mowed is taken into account in that the speed of the robotic mower is controlled and/or that an overlap of neighboring segments of the working path is realized.

An overlap of neighboring segments of the working path means that the areas mowed by the mowing unit of a robotic mower when following the neighbored segments of the working path overlap. So, when the robotic mower has finished the mowing operation on the first of two neighbored segments of the working path, the overlapping area is already mowed when the robotic mower mows on the second of the two neighbored segments. Therefore, the robotic mower does not need to mow the whole track width of the mowing unit and the load of the drive of the mowing unit is reduced. In addition, a certain degree of overlap of neighboring segments of the mowing path significantly reduces the risk of pieces remaining not mown between the mowing paths due to minimal inaccuracies in the positioning of the robotic mower.

In preferred embodiments of the invention the degree of overlap of neighboring segments of the work path is controlled according to the height and/or the density of the vegetation.

In embodiments of the invention data to specify the height and/or density of the vegetation to be mowed can be entered via the user portal.

In embodiments of the invention the height and/or density of the vegetation to be mowed is considered indirectly by monitoring the load of the motor(s) used to drive the mowing unit of a robotic mower. In some of these embodiments of the invention the server is designed to consider the average load of the motor(s) used to drive the mowing unit of at least one robotic mower on a reference track, for example the perimeter, and to determine the distance between neighbored segments of the work path accordingly to realize the desired degree of overlap.

In embodiments of the invention the at least one robotic mower is designed to permanently monitor the load of the motor(s) used to drive the mowing unit and to send the load-data to the server.

In specifically preferred embodiments of the invention the server is designed to permanently receive and evaluate the load-data of at least one robotic mower during mowing operation and to adapt the precalculated working path by adapting the distance between neighbored segments of the work path to realize the degree of overlap in correlation with the load-data and to send the updated work path to the at least one robotic mower.

In embodiments of the invention the overlap of neighbored working path segments ranges from about 30 cm to about 100 cm. The degree of overlap is either linear with respect to the load of the mowing unit from low load to the highest allowable operating load during mowing in embodiments of the invention, or it is varied in stages. For example, the degree of overlap can be varied in three stages from 40 cm, 70 cm and 100 cm, depending on the degree of engine load. The range varies from the lowest operating load of the machine during mowing to the highest operating load of the machine during mowing. This load is divided into thirds in the three-stage example. Of course, it is possible to operate without any overlap, if it is not required in all embodiments of the invention. Nevertheless, in some embodiments of the invention it is always operated with a certain overlap to assure no pieces not mown remain between the working paths.

In embodiments of the invention the overlap can be manually changed during operation by a user at any time via the user portal.

In embodiments of the invention the system for controlling at least one robotic mower comprises at least one operator device for the optional manual control of at least one robotic mower of the system.

In preferred embodiments of the invention the operator device is realized as a remote controller.

In these embodiments the robotic mower is designed to establish a wireless communication link, for example a Bluetooth and/or a UHF-communication link, between the robotic mower and the operator device.

The operator device is designed to manually control at least one robotic mower and to switch between a manual control mode and an autonomous mode of the at least one robotic mower.

In manual control mode the operator has the full control over the at least one robotic mower.

For example, in cases where an obstacle occurs that has not been initially specified and been considered by the server for calculating the working path, the operator is able to manually switch to the manual control mode, to drive the robotic mower around the obstacle and to switch back to the autonomous mode.

In embodiments of the invention the manual control mode can also be activated in the event of a collision with the unknown obstacle.

In embodiments of the invention the robotic mower and/or the server is/are designed to record the new working path manually adapted to bypass the obstacle and the server is designed to save the updated working path.

In preferred embodiments of the invention the operator device and/or the user terminal is designed to send indication data for a manually adapted working path segment directly or indirectly to the server to indicate if the manual adaption of the working path is related to a new permanent obstacle. The server is designed to update the corresponding working path only if a new permanent obstacle indication is sent related to the manual path adaption and/or to include the new obstacle in the map for the work area.

In embodiments of the invention the server is designed to save all versions of the working path(s). In some of these embodiments the working path for a robotic mower can be selected by a user or an operator out of these tracks before starting the mowing operation.

In preferred embodiments of the system for controlling at least one robotic mower according to the invention an emergency stop function for immediately stopping the at least one robotic mower is implemented. The emergency stop function may for example be triggered either by a detection of a collision of a robotic mower, by pressing an emergency stop button on an operator device or the robotic mower or by a server command sent to the server in embodiments of the invention.

In embodiments of the invention the operator device comprises an emergency stop button and is designed to communicate the emergency stop command to the respective robotic mower via an UHF communication link. In specific embodiments of the invention the communication frequency for transmitting the emergency stop command is set to 446.8 MHz.

A server command for an emergency stop may for example be sent to a robotic mower if the GNSS signal is lost for a time longer than a predefined threshold or if the position or movement data of the robotic mower is not plausible.

In embodiments of the invention the at least one robotic mower is equipped with an inertial navigation module to still allow an estimation of the position of the robotic mower in case of a GNSS signal loss. In these embodiments the server is designed to receive the inertial navigation data of the at least one robotic mower and to estimate the position of the at least one robotic mower.

In preferred embodiments of the invention the server is designed to adapt the working path in case of a GNSS signal loss such that the robotic mower is moved to a position with a GNSS signal within a certain time limit after signal loss using a map or a map layer including the GNSS signal strength at least for parts of the work area. As soon as the GNSS signal is recovered a precise determination of the position of the robotic mower is possible.

In embodiments of the invention the server is designed to calculate the expected route to lead the robotic mower to an expected location with a GNSS signal. If the GNSS signal is not restored within 30 seconds, the robotic mower is stopped by the server. Preferably this feature is implemented in systems with a robotic mower without inertial navigation.

In embodiments of the invention with at least one defined refueling, recharging or maintenance zone (service zone) the system is designed to permanently monitor the according measurement values like the energy remaining in the battery or the fuel level of the at least one robotic mower during the operation. If one of these values changes to a critical state indicating that refueling, recharging or a maintenance is required or will be required soon, the server is designed to calculate a service track for the corresponding robotic mower to guide it to the nearest service zone.

The server is designed to use the stored map information for the working path calculations also for calculating the service tracks. Therefore, any known obstacles and/or zones without GNSS signal are avoided with the service tracks too.

In preferred embodiments of the invention, the server is designed to calculate the service tracks based on determining the shortest distance between the current position of the robotic mower and the service zone.

In preferred embodiments of the invention the server is designed to evaluate which parts of the remaining working path can still be covered on the way of the robotic mower to the service zone without a high risk for running out of fuel / energy and a separate service track will only be used for the rest of the route to the service station in order to increase efficiency.

In advantageous embodiments of the invention the mowing unit is switched on, when the robotic mower is using the working path. If the robotic mower is using a separate service track, the mowing unit is switched off.

In embodiments of the invention the system is designed to permanently monitor at least one engine parameter of the at least one robotic mower on at least two different units. For example, the robotic mower and the server are designed to monitor the at least one engine parameter. If the at least one engine parameter exceeds a predefined limit value (for example overtemperature), the robotic mower is supposed to stop operation. If this safety feature of the robotic mower does not work for any reason, the server is designed to send a stop command to the robotic mower.

In the according embodiments of the invention the server is designed to serve as a backup instance in these events. If the robotic mower does not stop, the server sends an instruction and the robotic mower stops. If the robotic mower gets stuck and the collision sensors (e.g. safety bumpers) are not activated and the robotic mower does not move, but the engine and mowing unit are still under operational load, the robotic mower is turned off by the server after 10 seconds in embodiments of the invention.

In preferred embodiments of the system where at least two robotic mowers are controlled, the server is designed to calculate working paths for each of the robots assigned to a work area, to permanently monitor the position of the robotic mowers and to avoid a collision of the robotic mowers.

In a preferred embodiment of the invention the system for controlling at least one robotic mower comprises at least one robotic mower according to the invention.

The method for controlling at least one robotic mower according to the invention comprises at least the following steps:
- Calculating at least one working path for at least one robotic mower for a work area defined by a map on a server
- Assigning the working path to a robotic mower
- Sending the calculated working path from the server to the assigned robotic mower
- Saving the working path on the assigned robotic mower
- Starting the mowing operation of the at least one robotic mower
- Monitoring of the position of the at least one robotic mower

As soon as the working path has been calculated on the server and/or saved on the robotic mower the corresponding steps can be omitted in future mowing operations.

In preferred embodiments of the invention the method additionally comprises the following steps:
- Calculation of correction data for the at least one robotic mower on the server based at least on the deviation of the measured actual position of the robotic mower and the precalculated working path
- Sending the correction data to the at least one robotic mower
- Implementing the correction data on the at least one robotic mower

In embodiments of the method according to the invention the map is generated on the server using at least coordinates corresponding to locations on the perimeter of the work area. The number of the required coordinates to generate a 2D map of the work area is depending on the shape of the work area.

In preferred embodiments of the method according to the invention the locations of known obstacles in the work area are provided to the server in advance to calculating the working path for the at least one robotic mower and the obstacles are considered by the server when calculating the at least one working path such that collisions of the at least one robotic mower and the obstacles are avoided in operation.

In embodiments of the methods according to the invention the position and optionally status information of the at least one robotic mower is/are permanently monitored at least during mowing operation, the position and status information are sent from the robotic mower to the server and from the server to a user portal, in which the data is being displayed to a user.

In an embodiment of the method according to the invention the system for controlling at least one robotic mower according to the invention is used.

In embodiments of the method according to the invention the method is implemented to make use of all or at least some of the features of the system for controlling at least one robotic mower according to the invention.

In embodiments of the invention the robotic mower and/or the system for controlling at least one robotic mower is/are designed to execute the method for controlling at least one robotic mower according to the invention.

In other embodiments of the invention the teaching according to the invention is applied to applications other than mowing. Therefore, the teaching according to the invention may be used for example for robots designed for cleaning, vacuuming, snow removal, solar panel cleaning, construction, plowing, harvesting or other agricultural machines, for example for the work in vineyards or orchards.

The drawings explained hereinafter show exemplary embodiments of the invention. They show:
- Figure 1:: A schematic block diagram of a robotic mower according to the invention,
- Figure 2:: A schematic block diagram of a system for controlling at least one robot according to the invention,
- Figure 3:: An illustration of the adjustable overlap of neighboring segments of the working path in embodiments of the invention and
- Figure 4:: A flow chart of a method for controlling at least one robot according to the invention.

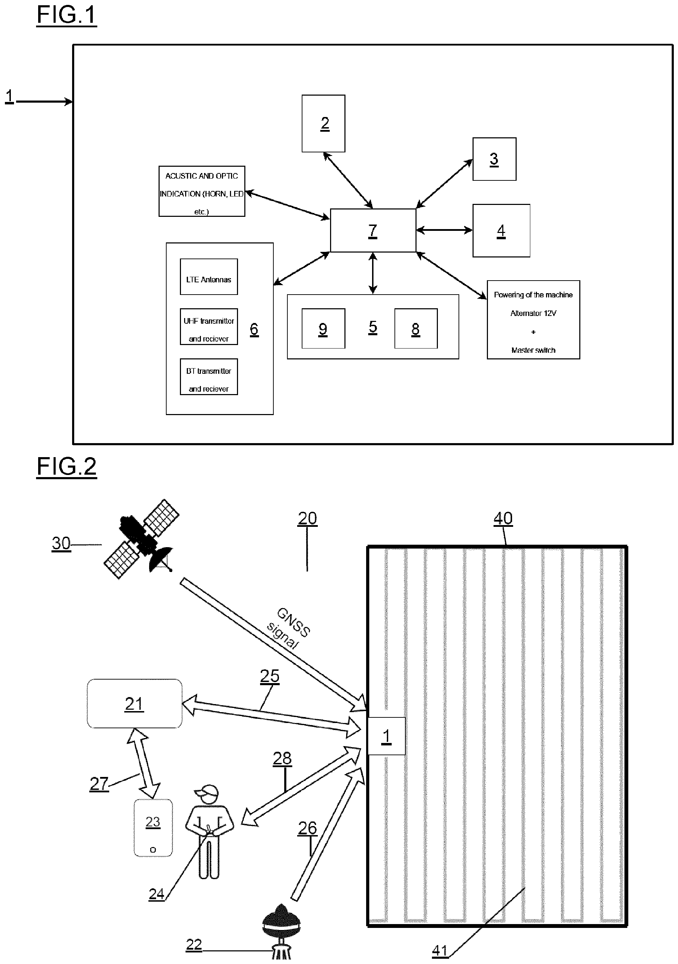

Figure 1 shows a schematic block diagram of a robotic mower (1) according to the invention. The robotic mower (1) comprises a drive system (2) to drive the robotic mower (1), a mowing unit (3) designed to mow vegetation, at least one sensor (4) to sense at least one measurement variable, a localization module (5) to determine the position of the robotic mower (1), a communication unit (6) and a control unit (7) to control the other modules of the robotic mower (1).

The localization module (5) comprises an inertial navigation module (8) and a GNSS-module (9).

The communication unit (6) comprises LTE antennas for the primary communication link especially with a server and a local correction station, a UHF-transceiver as well as a Bluetooth-transceiver.

Further, the robotic mower (1) comprises a power module to provide the electrical energy required for powering the electronics, which is realized by an alternator in combination with a master switch in the showed embodiment.

In addition, the robotic mower (1) comprises acoustic and optic indicators, for example a horn, lights, etc. to provide warnings and/or status information.

Figure 2 shows a schematic block diagram of a system (20) for controlling at least one robotic mower (1) according to the invention. The system (20) comprises a robotic mower (1) shown during mowing operation following the assigned working path (41) on the work area (40), a server (21), a local correction station (22), a user terminal (23) and an operator device (24).

The server (21) is connected with the robotic mower (1) via a first communication link (25), realized as an LTE-connection in this embodiment of the invention.

The robotic mower (1) is connected with the local correction station (22) via a second communication link (26), which is primarily realized as an LTE-connection in this embodiment of the invention. A secondary communication link using UHF-technology is provided as a backup second communication link.

The server (21) is connected with a user terminal (23) providing a user portal via a third communication link (27) realized as an LTE-connected in this embodiment of the invention.

The operator device (24) is realized as a remote controller to allow an operator to manually control the robotic mower (1) if required or desired. The operator device (24) and the robotic mower (1) are connected via a fourth communication link (28) realized as a Bluetooth and/or UHF-connection in the shown embodiment of the invention.

The localization module (9) of the robotic mower (1) comprises a GNSS-module in communication with the satellites of a GNSS (30). In combination with the local correction station (22) a high-accuracy GNSS is realized to allow accuracies of the localization of the robotic mower (1) in the range of 1 cm.

The working path (41) is calculated by the server (21) in such a way, that the whole work area (40) can be covered by the robotic mower (1) following the working path (41) in mowing operation.

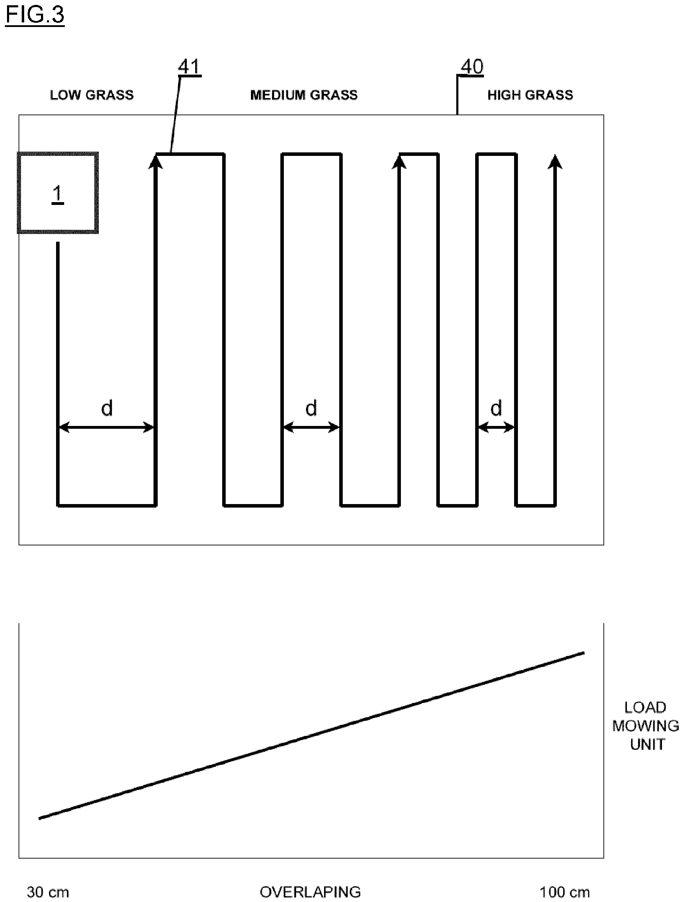

In Figure 3 embodiments of the invention with an adjustable overlap of neighbored segments of the working path (41) on the work area (40) are illustrated. The height of the vegetation, given by grass here, is varying from low gras on the left side of the work area (40) to medium gras in the middle of the work area (40) to high grass on the right side of the work area (40). In this embodiment the degree of overlap of neighbored segments of the working path (41) is linearly adjustable in dependency of the load of the engine of the mowing unit (3) as shown in the lower part of the figure. This results in neighbored segments of the working path (41) being closer to each other with increasing height of the grass and the corresponding increase of the load of the engine. Therefore, the distance d between neighbored segments of the working path (41) is reduced with increasing load of the engine. With a given constant mowing width of the mowing unit (3) this results in an increased overlap of the mowed area of neighbored segments of the working path (41).

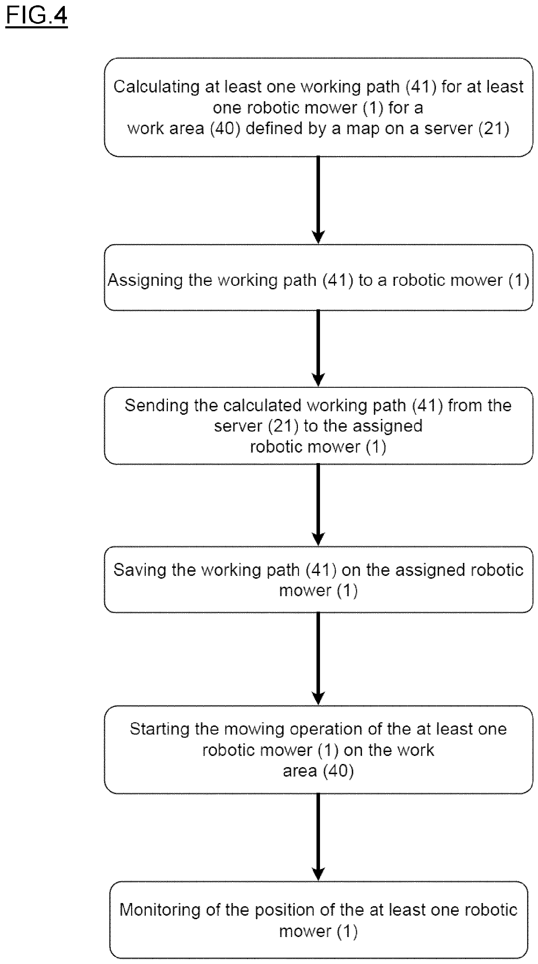

Figure 4 shows a flow diagram of the method for controlling at least one robotic mower (1) in an embodiment according to the invention. The method comprises the steps:
a) Calculating at least one working path (41) for at least one robotic mower (1) for a work area (40) defined by a map on a server (21),
b) Assigning the working path (41) to a robotic mower (1),
c) Sending the calculated working path (41) from the server (21) to the assigned robotic mower (1),
d) Saving the working path (41) on the assigned robotic mower (1),
e) Starting the mowing operation of the at least one robotic mower (1),
f) Monitoring of the position of the at least one robotic mower (1).

## Claims

1. Robotic mower (1) comprising at least one axle with at least one wheel, a drive system (2), at least one mowing unit (3) and a chassis to carry all the parts of the robotic mower (1), at least one sensor (4) for detecting at least one measured variable, at least one localization module (5) designed to work in a high-accuracy GNSS, a communication unit (6) to wirelessly communicate with a server (21), **characterized in that**, the robotic mower (1) is designed to receive complete working path information for an assigned work area (40) from the server (21) and to perform the mowing operation following the precalculated working path (41).

2. Robotic mower (1) according to claim 1, **characterized in that**, the communication unit (6) is additionally designed to establish a wireless communication link (26) between the robotic mower (1) and a local correction station (22) of the high-accuracy GNSS using a first telecommunication technology.

3. Robotic mower (1) according to claim 2, **characterized in that**, the communication unit (6) is designed to establish a backup communication link between the local correction station (22) and the robotic mower (1) in the event of a weak signal or a signal loss of the first telecommunication technology using a second telecommunication technology different from the first telecommunication technology.

4. Robotic mower (1) according to any of the preceding claims, **characterized in that**, the working path information at least contain the coordinates of a start and an end position of the working path (41) as well as coordinates representing the path between the start and the end position.

5. Robotic mower (1) according to any of the preceding claims, **characterized in that**, it is designed to receive correction data from the server (21) while operating on the working path (41) and to use the correction data for navigating itself.

6. System (20) for controlling at least one robotic mower (1), the system (20) comprising a server (21) and at least one robotic mower (1) and being designed to plan and to control the mowing operation of the at least one robotic mower (1) on a defined work area (40), wherein the at least one robotic mower (1) and the server (21) are connected by a wireless communication link (25) and wherein the server (21) is designed to receive work area information data at least comprising geolocations allowing the server (21) to create a map of the work area (40), **characterized in that**, the server (21) is designed to calculate at least one working path (41) for the at least one robotic mower (1) to mow the work area (40) using the provided data regarding the work area (40) and the at least one robotic mower (1) is designed to receive the calculated work path (41) from the server (21) and to follow the assigned work path (41) during the mowing operation.

7. System (20) according to claim 6, **characterized in that**, it comprises at least one local correction station (22) to realize a high-accuracy GNSS in combination with at least one GNSS receiver mounted on the at least one robotic mower (1) wherein the at least one robotic mower (1) is designed to establish a wireless communication link (26) to the at least one local correction station and to use the at least one local correction station (22) to realize the high-accuracy GNSS.

8. System (20) according to one of the claims 6 and 7, **characterized in that**, the at least one robotic mower (1) is designed to permanently monitor its position at least during the mowing operation and to send the position data to the server (21), the server (21) is designed to permanently monitor the position of the at least one robotic mower (1) at least during the mowing operation and to detect deviations of the current position of the at least one robotic mower (1) and the assigned work path (41) and the server (21) is designed to calculate correction data for the at least one robotic mower (1) based at least on the position of the robotic mower (1) and the deviation from the assigned work path (41) and to send this correction data to the corresponding robotic mower (1) to control the robotic mower (1) to stay or to move back on the assigned working path (41).

9. System (20) according to one of the claims 6 to 8, **characterized in that**, the server (21) is designed to receive 2D-coordinates of the work area (40), to generate a 2D-map of the work area (40) and to calculate at least one 2D working path (41) for the at least one robotic mower (1).

10. System (20) according to one of the claims 6 to 9, **characterized in that**, the server (21) is designed to generate a multi-layer map of the work area (40), wherein one layer contains the work area (40) or at least its perimeter, another layer contains obstacles in the work area (40) at their positions and potential other layers contain additional work area (40) related information.

11. System (20) according to one of the claims 6 to 10, **characterized in that**, the server (21) is designed to directly or indirectly consider the height and/or the density of the vegetation to be mowed on the work area (40) for the initial calculation of the working path (41) for at least one robotic mower (1) and/or for updating the assigned working path (41) of at least one robotic mower (1) during mowing operation wherein the speed of the robotic mower (1) is controlled and/or that an overlap of neighboring segments of the working path (41) is realized.

12. System (20) according to one of the claims 6 to 11, **characterized in that**, the system (20) comprises a user terminal (23), wherein the server (21) is connected to the user terminal (23) and the user terminal (23) is designed to provide a user portal, where information regarding a planned, running or a past mowing operation is been made available for a user and user inputs may be entered and communicated to the server (21).

13. System (20) according to one of the claims 6 to 12, **characterized in that**, the system (20) comprises at least one operator device (24) to allow an operator to manually control at least one robotic mower (1) of the system (20).

14. System (20) according to one of the claims 6 to 12, **characterized in that**, the system (20) comprises at least one robotic mower (1) according to one of the claims 1 to 5.

15. Method for controlling at least one robotic mower (1) comprising the steps:
a. Calculating at least one working path (41) for at least one robotic mower (1) for a work area (40) defined by a map on a server (21),
b. Assigning the working path (41) to a robotic mower (1),
c. Sending the calculated working path (41) from the server (21) to the assigned robotic mower (1),
d. Saving the working path (41) on the assigned robotic mower (1),
e. Starting the mowing operation of the at least one robotic mower (1) on the work area (40),
f. Monitoring of the position of the at least one robotic mower (1).

16. Method according to claim 15, **characterized in that**, the following steps are additionally comprised:
a. Calculation of correction data for the at least one robotic mower (1) on the server (21) based at least on the deviation of the measured actual position of the robotic mower (1) from the precalculated working path (41),
b. Sending the correction data from the server (21) to the at least one robotic mower (1),
c. Implementing the correction data on the at least one robotic mower (1).

17. Method according to one of the claims 15 and 16, **characterized in that**, a system (20) according to one of the claims 6 to 14 is used.
